# EUROPÄISCHE PATENTSCHRIFT

(11) **EP 1 406 207 B1**
(45) Veröffentlichungstag und Bekanntmachung des Hinweises auf die Patenterteilung: **21.12.2005**
(21) Anmeldenummer: 02022420.0
(22) Anmeldetag: 04.10.2002
(51) Int. Cl.: G06K 17/00

(54) **Verfahren zur Überwachung von Gütern**
Method for monitoring objects
Méthode de suivi de biens

(43) Veröffentlichungstag der Anmeldung: 07.04.2004
(73) Patentinhaber: Siemens Schweiz AG, 8047 Zürich (CH)
(72) Erfinder: Bächtiger, Rolf, 8966 Oberwil-Lieli (CH); Zehnder, Charles, 4102 Binningen (CH)
(74) Vertreter: Fischer, Michael

(56) Entgegenhaltungen:
- WO-A-94/27117
- DE-A- 10 062 303
- DE-A- 19 911 302

## Beschreibung

Die vorliegende Erfindung betrifft ein Verfahren zur Überwachung von Gütern sowie ein Überwachungssystem zur Durchführung des vorgenannten Verfahrens nach dem Oberbegriff des Patentanspruchs 1.

Die vorliegende Erfindung befasst sich mit dem Gebiet der Überwachung und Verfolgung von mit einem Verkehrsmittel zu transportierenden Gütern oder auch von in einem Areal befindlichen Gütern.

Um die Information über die mutmassliche Ankunftszeit von in Containern beförderten Gütern den Empfängern zugänglich zu machen, sind web-basierte Informationssysteme bekannt, bei denen ein potentieller Empfänger sich über den Transportverlauf seiner Güter erkundigen kann. Diese Systeme basieren z.B. bei Lastwagen mit einer mittels des globalen Positionierungssystems GPS ermittelten Ortsangabe. In einer Datenbank eines Transportunternehmens ist dabei eine Zuordnung von Auftrags- oder Aufgabenummer zum betreffenden Lastwagen gespeichert. Die Zuordnung selber kann z.B. mittels eines Bar-Code Lesers vorgenommen werden. Der Lastwagenchauffeur erfasst mit einem Gerät einen an einem Container angebrachten Barcode. Mittels einer auf dem Lastwagen befindlichen Kommunikations- und Ortungseinheit werden diese Daten der genannten zentralen Datenbank übermittelt. Der Bar-Code ist dabei Schlüssel eines Frachtbriefes.

Für die Erfassung der Daten in der Art eines vorgenannten Systems wird in der Schrift DE 199 11 302 A1 (Creutzmann, Jochen, DE-Hamburg) ein Verfahren vorgeschlagen, wo die benötigten Daten beim Be- und Entladen in einer auf dem Fahrzeug befindlichen Speichereinrichtung abgelegt werden. Für die Identifikation der Güter bzw. der Container sind Transponder vorgesehen. Mittels einer aktualisierten Ortsinformation für das Fahrzeug kann auch eine Fahrroutenabweichung festgestellt werden und gegebenenfalls mit einer . auf dem betreffenden Fahrzeug angeordnete Sendeeinrichtung eine Benachrichtigung der zugehörigen Transportunternehmung ausgelöst werden. Wird der Frachtraum zu einer Unzeit geöffnet, kann ebenfalls eine Benachrichtigung in der vorgenannten Art erfolgen. Damit ist es möglich, Interventionskräfte an der Ort des betreffenden Fahrzeuges zu beordern. Nachteilig bei diesem System ist, dass die Datenerfassung zwingend beim Be- und Entladen der Güter erfolgen muss.

In der Schrift DE 196 28 801 A1 (Daimler-Benz Aerospace AG) ist ein rechnergestütztes Güterabfertigungssystem offenbart, bei dem entlang der vorgesehenen Route stationäre oder mobile Lese-/Schreibgeräte mit an Fahrzeugen angebrachten Transpondern in eine Verbindung treten, um Daten auszutauschen. Abhängig vom Ergebnis der Überprüfung der ausgetauschten Daten wird die Weiterfahrt des betreffenden Transportfahrzeuges erlaubt oder verhindert.

Für die Überwachung der zu transportierenden Güter ist es für einen Empfänger wichtig, nicht nur exakt den jeweiligen Aufenthaltsort und die mutmassliche Ankunftszeit zu kennen, sondern erforderlichenfalls auch den Zustand der zu transportierenden Güter in Erfahrung zu bringen. Dies ist insbesondere bei verderblichen Produkten wichtig. Es genügt dabei nicht, lediglich beim Entladen anhand eines Logbuches oder einer Logdatei festzustellen, dass z.B. die transportierte Glacé zeitweise einer Temperatur höher als -5° C ausgesetzt war und bei erneuter Normtemperatur von -24° C kristallisierte und deswegen nicht mehr verkauft werden darf. Diese Information sollte schon vorher dem Empfänger und/oder dem Absender der Glacé zugänglich gemacht werden. Auf diese Weise könnte eine Zweitlieferung veranlasst werden, ohne dass der Empfänger dies erfahren muss.

Der vorliegenden Erfindung liegt daher die Aufgabe zugrunde, ein Überwachungssystem für Güter anzugeben, das ohne manuelle Verfahrenshandlungen eine Mehrzahl von Gütern oder Güterbehältern hinsichtlich des momentanen Aufenthaltsortes und der jeweiligen Einflussfaktoren überwacht, so dass bereits vor Auslieferung am Zielort ein Zugriff auf die entsprechenden Daten möglich ist.

Diese Aufgabe wird durch die im Patentanspruch 1 angegebenen Merkmale gelöst.

Durch die Verfahrensschritte, wonach
A Einwirkungsgrössen auf ein Gut in jedem zugeordneten Transponder mit einem angeschlossenen Sensormittel registriert werden;
B die Transponder untereinander über ihre Sende-/Empfangsmodule die registrierten Einwirkungsgrössen übermitteln;
C einer der Transponder über sein Sende-/Empfangsmodul der dem Transportmittel zugeordneten Kommunikationseinheit die Gesamtheit der von den Transpondern registrierten Einwirkungsgrössen übermittelt;
ist ein Verfahren geschaffen, das autonom und automatisch Einwirkungsgrössen auf Güter registriert und auf einer Kommunikationseinheit zur Auswertung zugänglich macht. Die für die Durchführung des Verfahrens erforderlichen Mittel können dank einer Funkkommunikation der Transponder untereinander auf einfache Weise den zu transportierenden oder lagernden Gütern zugeordnet werden.

Vorteilhafte Ausgestaltungen der Erfindung sind in weiteren Ansprüchen angegeben.

Durch eine Kommunikationsverbindung der Kommunikationseinheit mit einer abgesetzten Zentrale können die registrierten Einwirkungsgrössen von einer Mehrzahl von Transportmitteln überwacht werden und bei festzustellenden Abweichungen von zulässigen Werten der Einwirkungsgrössen können sehr frühzeitig Interventions-, Korrektur- oder Abhilfemassnahmen ausgelöst werden. Dadurch kann in Einzelfällen eine weitergehende Schädigung der zu transportierenden Güter vermieden werden (Patentanspruch 5).

Die für die Registrierung der Einwirkungsgrössen dienenden Sensormittel können auch auf einem die Güter umgebenden Container zugeordnet werden, ohne dass deswegen das erfindungsgemässe Verfahren einer Modifikation bedarf. Insbesondere ist auf einem Transportmittel ein gemischter Betrieb möglich bei dem einzelne Sensormittel Containern und andere den Gütern direkt zugeordnet werden (Patentanspruch 2).

Die auf einem Transportmittel befindliche Mehrzahl von Transpondern bilden ein sogenanntes Ad-Hoc Netzwerk. Dadurch sind bei der Beladung eines Transportmittels mit Containern oder Gütern keinerlei Rücksichtnahmen auf deren räumliche Anordnung zu nehmen, da diese Transponder die Kommunikation untereinander autonom organisieren (Patentanspruch 3).

Durch von der Kommunikationseinheit zu Beginn eines Transportes an die Transponder ausgesendete Meldungen wird aufgrund von Quittungsmeldungen jener Transponder bestimmt, der die Gesamtheit der von den Transpondern registrierten Einwirkungsgrössen an die Kommunikationseinheit übermittelt. Dadurch braucht beim Beladen weder Rücksicht auf die Stapelung der Container oder Güter noch Rücksicht auf die Zuordnung von Transpondern zu Containern oder Gütern genommen werden (Patentanspruch 4).

Die Erfindung wird nachfolgend anhand der Zeichnung beispielsweise näher erläutert. Dabei zeigen:
- Figur 1: Anordnung der Komponenten des erfindungsgemässen Systems auf einem Schiff;
- Figur 2: Anordnung der Komponenten des erfindungsgemässen Systems auf einem Eisenbahnzug;
- Figur 3a: Anordnung eines Transponders an einem Container;
- Figur 3b: Blockschaltbild eines Transponders;
- Figur 4: Prinzipdarstellung der funktionellen Komponenten einer Sende-/Empfangseinheit auf einem Fortbewegungsmittel;
- Figur 5: Topologische Anordnung der Transponder.

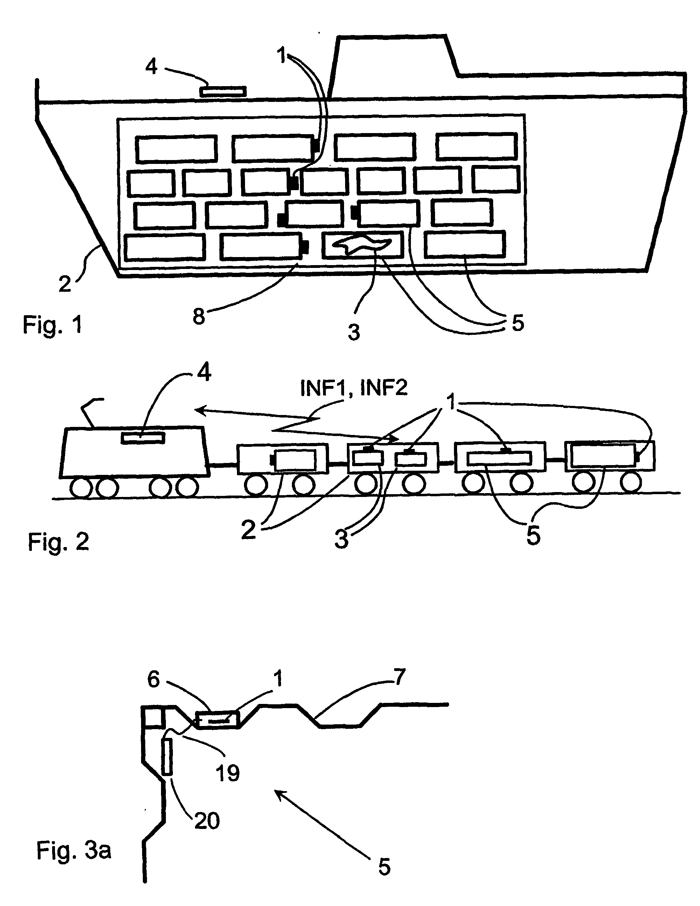

In der Figur 1 ist als Transportmittel 2 ein Schiff mit einem Schiffsbauch 8 dargestellt, der in freier und ungeordneter Weise Container 5 enthält, in denen sich zu transportierende Güter 3 befinden. Vorzugsweise auf dem Deck des Schiffes ist eine Kommunikationseinheit 4 angebracht. In diesem Ausführungsbeispiel ist jeder Container 5 mit einem Transponder 1 versehen. Dies ist aus Übersichtlichkeitsgründen in der Figur 1 nur partiell dargestellt. Jeder dieser Transponder 1 ist mit wenigstens einem Sensormittel 20 verbunden. Vom Sensormittel 20 erfasste Einwirkungsgrössen werden im zugehörigen Transponder 1 registriert. Mit Sensormitteln 20 kann eine oder mehrere der folgenden Einwirkungsgrössen registriert werden:
- Temperatur im Container 5 oder ausserhalb des Containers 5,
- Luftfeuchtigkeit im Container 5,
- Beschleunigung, wie z.B. Stoss, Schock oder Vibration,
- elektromagnetisches Feld am Container 5,
- ionisierende Strahlung,
- chemische Zusammensetzung der Umgebungsluft,
- Öffnung des Containers 5 oder des Gutes 1 mittels eines Kontaktes.

Eine zweite Anordnung von mit Containern 5 zu transportierenden Gütern 3 ist in Figur 2 anhand eines Güterzuges dargestellt. Insbesondere brauchen die Transponder 1 nicht notwendigerweise an einem Container 5 befestigt zu werden, sondern können auch direkt an einem zu transportierenden Gut 3 angebracht werden, wie dies aus der Figur 2 beim zweiten Güterwagen zu entnehmen ist.

Die Befestigung eines Transponders 1 an einem Container 5 ist beispielhaft der Fig. 3a zu entnehmen: Der Transponder 1 ist mit einem Trägerelement 6 an die gewellte Aussenwand 7 eines Containers 5 angebracht. Als Transponder 1 werden bevorzugt sogenannt "elektronische Billette" verwendet, wie sie z.B. in der Schrift WO 01/20557 A1 (Siemens Transit Telematic Systems AG) offenbart sind. Die typischen Abmessungen für solche Transponder 1 liegen in der Grössenordnung einer Kreditkarte. Das Trägerelement 6 kann als bevorzugt als Kunststoffmasse oder als Stoffumschlag ausgebildet sein. Im Falle eines Stoffumschlages wird dieser bevorzugt mit einem Klettverschluss an eine vorbestimmte Stelle eines Containers 5 angebracht. Der Stoffumschlag kann seinerseits ebenfalls mit einem Verschluss versehen sein, um einen bestimmten Transponder auf einfache Weise darin unterzubringen. Dessen Verschliessbarkeit kann ebenfalls auf der Basis eines Klettverschlusses beruhen. Dank den geringen Dimensionen des Transponders 1 einschliesslich des Trägerelementes 6 erfolgt die Befestigung in einem "Tal" der gewellten Oberfläche des Containers 5. Dadurch ist die Gefahr eines Abscherens oder Abstreifens z.B. während des Beladevorganges minimalisiert. Durch eine Öffnung in der Aussenwand 7 kann eine Anschlussverbindung 19 zu einem im Innern des Containers 5 befindlichen Sensormittel 20 gezogen werden. Mit diesem Sensormittel 20 kann beispielsweise die Lufttemperatur im Innern des Containers 5 registriert werden. Für die Registrierung von eines elektromagnetischen Feldes, einer ionisierenden Strahlung oder einer Beschleunigung wie z.B. Vibration, Stoss und Schock kann das Sensormittel 20 auch aussen an der Aussenwand 7 des Containers 5 befestigt werden. Als weiteres Beispiele für im Innern eines Containers 5 zu registrierende Einwirkungsgrössen sind zu nennen:
die chemische Zusammensetzung der Umgebungsluft wie z.B. der Anteil Stickstoff N₂ oder das Vorhandensein von Rauchgasen. Die Befestigung des Transponders 1 kann anstelle des vorgenannten Klettverschlusses auch dadurch erfolgen, dass der Transponder 1 mit einer Drahtschlaufe befestigt wird, die transponderseitig von einem Strom durchflossen wird. Die Drahtschlaufe wird über das weiter unten beschriebene Interfacemodul 15 geführt. Dadurch ist es möglich, ein unbefugtes Entfernen eines Transponders 1 von einem Container 5 oder einem Gut 3 festzustellen und gegebenenfalls einen Alarm zuhanden von Interventionskräften auszulösen.

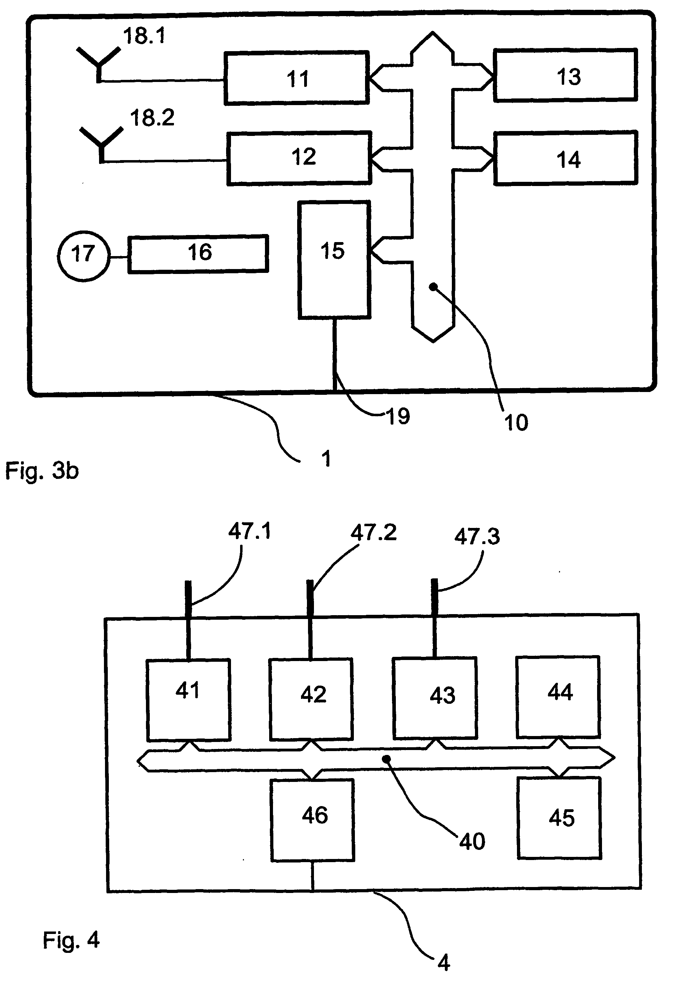

Figur 3b zeigt das Blockschaltbild eines Transponders 1 mit den Komponenten:
- Erstes Empfangsmodul 11 und zweites Sende-/Empfangsmodul 12 mit zugeordneten Antennen 18.1 und 18.2;
- Prozessormodul 13 und Speichermodule 14;
- Interfacemodul 15, an das über die Anschlussverbindung 19 wenigsten ein Sensormittel anschliessbar ist;
- Energieversorgungsmodul 16 mit Batterie 17 (ohne Darstellung der elektrischen Verbindungen).
Die vorgenannten Module 11, 12, 13, 14 und 15 sind über ein Bussystem 10 miteinander verbunden.

Die Kommunikation mit einem Transponder 1 kann auf verschiedene Weise realisiert werden. In diesem Ausführungsbeispiel wird jene zugrunde gelegt, wie sie in der Schrift WO 01/20557 A1 offenbart ist. Über das erste Empfangsmodul 11 werden die Transponder 1 mittels eines Signals von z.B. der Frequenz 7.68 MHz aus einem Schlafzustand geweckt. Dieses Signal beinhaltet auf einer höheren Schicht eine Meldung mit verschiedenen Informationsfeldern. Darunter ist auch eine Information enthalten, aufgrund der das zweite Sende-/Empfangsmodul 12 in einen intermittierenden Betriebsmodus geschaltet wird, wobei dieses zweite Sende-/Empfangsmodul 12 vorzugsweise auf einer wesentlich höheren Frequenz von z.B. im Bereich von 868 MHz betrieben wird. Aus Sicht eines Transponders 1 ist für die gehende bzw. kommende Kommunikationsverbindung je eine Frequenz vorzusehen, z.B. 868.0 MHz und 868.5 MHz. Möglich ist auch ein Semi-Duplex-Verfahren auf einer einzigen Frequenz. Der Weckvorgang kann alternativ zur vorher genannten Weise mit einem Gerät automatisch bei der Befestigung der Billette bzw. Transponder 1 an einem Container 5 oder während dem Beladen eines Schiffes 2 vorgenommen werden. Dazu muss lediglich die Kommunikationseinheit 4 beziehungsweise deren Antenne 47.3 sich in der Nähe der Ladeöffnung für den Schiffsbauch 8 angeordnet sein und im Betriebsmodus des "Weckens" geschaltet sein. Die Transponder 1 weisen gemäss der Schrift WO 01/20557 A1 eine hohe Autonomie auf. Bei dieser Anwendung zur Registrierung von Einwirkungsgrössen kann das Intervall für die bidirektionale Kommunikation auf einen längeren Raster im Bereich von einigen Minuten oder noch mehr eingestellt werden. Dadurch kann die Autonomie weiter gesteigert werden. Die Transponder 1 weisen je eine eigene Identität auf. Bei der Zuordnung von Transponder 1 zu Container 5 oder Transportgut 1 ist diese zuhanden einer späteren Auswertung und Überwachung zu registrieren. Dies kann mit einem mobilen Schreib-/Lesegerät vorgenommen werden, dessen Daten später einer Zentrale übermittelt werden. Mit diesem Gerät kann auch ein Transponder über das in WO 01/20557 A1 beschriebene Verfahren mit einer Frequenz von z.B. 7.68 MHz geweckt werden oder es ist auch möglich, durch eine galvanische Verbindung dem betreffenden Transponder 1 die Daten bezüglich der intermittierenden Betriebsweise zu übermitteln.

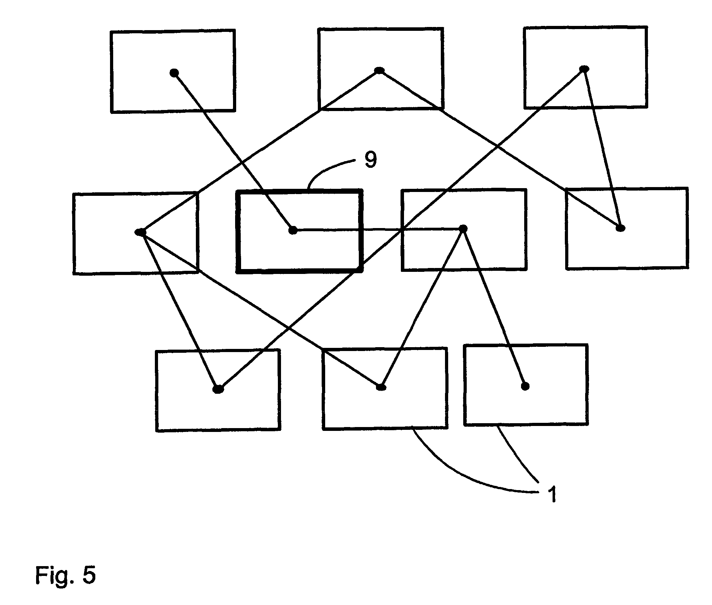

Die topologische Anordnung einer Vielzahl von Transpondern 1 in einem Schiffsbauch 8 oder auf einem Eisenbahnzug 2 (vgl. Fig. 2) ist in einer Prinzipdarstellung der Figur 5 zu entnehmen. Figur 2 mit den aneinandergehängten Eisenbahnwagen suggeriert eine Busstruktur. Dies trifft nicht zu, da die Transponder 1 keine Nachbarschaftsstruktur erkennen können. Deshalb sind die Kommunikationsverbindungen in aller Regel von einem Transponder 1 zu mehreren anderen Transpondern 1 aufbaubar bzw. aufgebaut. In einer solchen Topologie bilden diese Transponder 1 ein sogenanntes Ad-Hoc-Netz. Eine Wirkungsweise von Ad-Hoc-Netzen ist beispielsweise der Schrift DE 100 62 303 A1 (7 layers AG, DE-Ratingen) zu entnehmen. In der vorliegenden Figur 5 wird angenommen, dass der Transponder 9 als Mastertransponder 9 fungiert: Von diesem Transponder 9 erfolgt eine bidirektionale Kommunikation mit der dem Transportmittel 2 zugeordneten Kommunikationseinheit 4. Gemäss der Darstellung in Figur 5 erfolgt eine gegenseitige Übermittlung der in den einzelnen Transpondern 1 registrierten Einwirkungsgrössen. Dazu wird eine Datenstruktur INF1 benutzt, die beispielhaft der nachfolgenden Tabelle 1 zu entnehmen ist. Anstelle des Begriffes Datenstruktur wird in diesem Kontext auch der Begriff Meldungsstruktur benutzt.

**Tabelle 1**

| **Informationseinheit INF1** | |
|---|---|
| **Informationsfeld** | **Bedeutung** |
| ADDRESS1 | Adresse des sendenden Transponders 1 |
| ADDRESS2 | Adresse des Transponders 1, auf dem die ENVIRONMENT_VALUES registriert wurden. |
| DATETIME1 | Datum und Uhrzeit, Zeitstempel der Übermittlung an den empfangenden Transponder 1 |
| COMMAND | Befehle an den empfangenden Transponder 1 |
| ENVIRONMENT_VALUES | Registrierte Einwirkungsgrössen; abhängig vom Eintrag im Feld COMMAND kann dieser Eintrag auch entfallen. |
| DATETIME2 | Datum und Uhrzeit, Zeitstempel der Registrierung vom Feld ENVIRONMENT_VALUES |
| : | : |
| | |

Auf jedem Transponder 1 werden die empfangenen wie auch die auf dem betreffenden Transponder 1 registrierten Einwirkungsgrössen in einer Tabelle gespeichert, dabei ist vorzugsweise der Datentyp FILE vorzusehen. Diesem Ad-Hoc-Netz wird zugrundegelegt, dass einem der Transponder 1 eine bidirektionale Kommunikationsverbindung mit der dem Transportmittel 2 zugeordneten Kommunikationseinheit 4 gelingt. Dieser Transponder ist in der Figur 5 mit dem Bezugszeichen 9 ausgezeichnet und heisst Mastertransponder.

Die Zuordnung der Funktion "Mastertransponder" erfolgt vorzugsweise dynamisch. Von der Kommunikationseinheit 4 kann dazu eine besondere Meldung ausgesendet werden. Die diese Meldung empfangenden Transponder 1 quittieren den Empfang dieser Meldung. Dabei wird von der Kommunikationseinheit 4 analysiert, welcher der vorgenannten Transponder 1 die besten Empfangs- und Sendebedingungen aufweist. Dazu kann beispielsweise der Empfangspegel und dessen zeitlicher Verlauf ("Form" des Empfangssignals) aufgrund von Reflexionen analysiert werden. Grundvoraussetzung dazu ist, dass eine Verbindung auf Schicht 1 (im Sinne des OSI-Modells) stets sichergestellt ist. Auf die vorgenannte Weise kann von der Kommunikationseinheit 4 durch Aussenden einer Meldung an den ausgewählten Transponder 1 diesem die Funktion "Mastertransponder" 9 zugeordnet werden.

Nach erfolgtem Empfang vom Mastertransponder 9 zur Kommunikationseinheit 4 ausgesendeten Informationseinheiten INF1 mit den registrierten Einwirkungsgrössen erfolgt durch die Kommunikationseinheit 4 eine Quittierung. Dabei werden die in der vorerwähnten Tabelle bzw. Datei registrierten Einwirkungsgrössen gelöscht. Vom Mastertransponder 9 seinerseits erfolgt eine Aussendung einer weiteren Informationseinheit INF2 mit einer vergleichbaren Struktur wie jener von INF1. Im Feld COMMAND ist dabei eine Angabe enthalten, die betreffende Informationseinheit im empfangenden Transponder 1 zu löschen. Es sind hier nun zwei Fälle zu unterscheiden:
- Die betreffende Informationseinheit INF1 ist originär dem empfangenden Transponder: Das Verfahren ist beendet.
- Die betreffenden Informationseinheit INF1 entstammt einem anderen Transponder als dem empfangenden Transponder: Es erfolgt wiederum eine Aussendung einer weiteren Informationseinheit INF2. Die Adresse des empfangenden Transponders 1 ist dabei bekannt, siehe jeweils im Feld ADDRESS1.
Empfängt ein Transponder 1 eine für ihn nicht bestimmte Informationseinheit INF2, so wird sie vorzugsweise verworfen.

Zur Erläuterung der weiteren Bearbeitung der vom Mastertransponder 9 übertragenden Einwirkungsgrössen werden zunächst anhand der Figur 4 die funktionalen Einheiten der Kommunikationseinheit 4 erläutert.

Figur 4 zeigt eine Kommunikationseinheit, welche in dieser Ausführungsform umfasst:
- Sende-/Empfangseinheit 42 für die Kommunikation mit einer abgesetzten Zentrale;
- Sende-/Empfangseinheit 43 für die Kommunikation mit den Transpondern 1 und dem Mastertransponder 9;
- Ortungseinheit 41, z.B. ein GPS-Empfänger;
- Prozessoreinheit 44 und Speichereinheit 45;
- Antennen 47.1, 47.2 und 47.3 zur Ortungseinheit 41 und den Sende-/Empfangseinheiten 42 und 43;
- Stromversorgungseinheit 46;
- Bussystem 40 zur Verbindung der vorgenannten Einheiten.

Die über den Mastertransponder 9 zur Kommunikationseinheit 4 übermittelten Einwirkungsgrössen - einschliesslich wenigsten eines Zeitstempels - werden in der Speichereinheit 45 gespeichert; z.B. als Datentyp FILE. Zur Feststellung und Beurteilung der Zulässigkeit der registrierten Einwirkungsgrössen mit dem erfindungsgemässen Verfahren wird eine Kommunikationsverbindung zwischen der Kommunikationseinheit 4 und einer abgesetzten Zentrale etabliert. Dazu dient die Sende-/Empfangseinheit 43, die z.B. Teil eines Bündelfunksystems wie TETRA oder TETRAPOL oder eines zellulären Mobilkommunikationssystems wie GSM ist. Bei der Übertragung der registrierten Einwirkungsgrössen werden diese vorzugsweise mit einer Standortinformation versehen. Die Standortinformation kann der Ortungseinheit 41 entnommen werden. Je nach Art der transportierten Gütern 3 kann auch vorgesehen werden, die Ortsinformation abhängig von einem Zeitraster zu speichern, z.B. in einem Intervall von 30 s. Da die registrierten Einwirkungsgrössen ebenfalls mit einem Zeitstempel versehen sind, kann auf diese Weise bei der Übermittlung and die Zentrale die jeweils zutreffende Ortsinformation zugeordnet werden. Auf diese Weise kann mit einem sogenannten Postprocessing allenfalls eine unzulässige Einwirkung rekonstruiert werden. Dies ist insbesondere bei Transporten mit einem Lastwagen von Bedeutung. Mit dem Postprocessing können auch allfällige Fehlregistrierungen erkannt werden, die z.B. durch eine Parallelfahrt zweier Güterzüge entstehen könnten.

Die vorgenannten Antennen 41.1, 47.2 und 47.3 brauchen nicht direkt an der Kommunikationseinheit 4 angeschlossen werden, sondern werden vorteilhafterweise so abgesetzt angeordnet, dass damit optimale Sende-/Empfangsbedingungen erreicht werden können. Gegebenenfalls kann die Antenne 47.3 auch mehrfach in oder an einem Schiffsbauch angeordnet sein.

Die Erfindung ist nicht auf das vorerwähnte Ausführungsbeispiel beschränkt.
- Es ist auch möglich, als Transportmedium ein bereits in einen Transportmittel existierendes drahtloses Netzwerk zu benutzen, z.B. ein private wirless LAN oder ein Public wireless LAN.
- Die Erfindung kann auch in einem Lagerhaus 2 oder einem Lagerareal 2 angewendet werden, wo eine Vielzahl von Gütern 3 hinsichtlich der Einwirkungen von Umwelteinflüssen und hinsichtlich ihrer Anwesenheit überwacht werden müssen. Die Festlegung der Funktion Mastertransponder 9 kann dabei in einem festen Zeitraster erfolgen. Eine Neufestlegung dieser Funktion ist dann erforderlich, wenn das betreffende Gut 3 aus dem Lagerbereich verschoben wurde. Beim diesem Vorgang kann entweder der Transponder 9 am Gut 3 belassen werden oder durch einen manuellen Eingriff mit dem erwähnten Schreib-/Lesegerät gezielt deaktiviert werden.

### Liste der verwendeten Bezugszeichen und Abkürzungen

- 1: Transponder
- 2: Transportmittel; Lagerhaus, Lagerareal
- 3: Gut
- 4: Kommunikationseinheit
- 5: Container
- 6: Trägerelement
- 7: Aussenwand eines Containers
- 8: Schiffsbauch
- 9: Mastertransponder
- 10: Bussystem auf dem Transponder 1
- 11: Erstes Empfangsmodul
- 12: Zweites Sende-/Empfangsmodul
- 13: Prozessormodul
- 14: Speichermodul
- 15: Interfacemodul
- 16: Energieversorgungsmodul
- 17: Batterie
- 18.1: Antenne zum ersten Sende-/Empfangsmodul
- 18.2: Antenne zum zweiten Sende-/Empfangsmodul
- 19: Anschlussverbindung zu einem Sensormittel
- 20: Sensormittel
- 40: Bussystem auf Sende-/Empfangseinheit
- 41: Ortungseinheit
- 42: Sende-/Empfangsmodul für eine Verbindung mit einer abgesetzten Zentrale
- 43: Sende-/Empfangsmodul für die Kommunikation mit den Transpondern
- 44: Prozessoreinheit
- 45: Speichereinheit
- 46: Stromversorgungseinheit
- 47.1: Antenne zur Ortungseinheit
- 47.2: Antenne zum Sende-/Empfangsmodul 42
- 47.3: Antenne zum Sende-/Empfangsmodul 43

- GPS: Global Positioning System
- GSM: Global System for Mobile Communication
- LAN: Local Area Network
- OSI: Open System Interconnection
- TETRA: Trans-European Trunked Radio System
- TETRAPOL: "TErrestrial Trunked RAdio system for POLice"

### Liste der zitierten Schriften

DE 199 11 302 A1 (Creutzmann, Jochen, DE-Hamburg)
DE 196 28 801 A1 (Daimler-Benz Aerospace AG)
DE 100 62 303 A1 (7 layers AG, DE-Ratingen)
WO 01/20557 A1 (Siemens Transit Telematic Systems AG)

## Patentansprüche

1. Verfahren zur Überwachung von Gütern (3), wobei jedem Gut (3) ein ein Sende-/Empfangsmodul (11, 12) aufweisender Transponder (1) zugeordnet ist und wobei eine dem Transportmittel (2) zugeordnete Kommunikationseinheit (4) vorgesehen ist, die zur drahtlosen bidirektionalen Kommunikation mit Transpondern (1) dient,
**gekennzeichnet durch** die Verfahrensschritte:
A Einwirkungsgrössen auf ein Gut (3) werden in jedem zugeordneten Transponder (1) mit einem angeschlossenen Sensormittel (20) registriert;
B die Transponder (1) übermitteln untereinander über ihre Sende-/Empfangsmodule (11, 12) die registrierten Einwirkungsgrössen;
C einer der Transponder (9) übermittelt über sein Sende-/Empfangsmodul (11, 12) einer zugeordneten Kommunikationseinheit (4) die Gesamtheit der von den Transpondern (1) registrierten Einwirkungsgrössen.

2. Verfahren nach Anspruch 1,
**dadurch gekennzeichnet, dass**
einzelne Güter (3) in Containern (5) befindlich sind und dass ein Transponder (1) einem Container (5) zugeordnet ist und dass im Verfahrensschritt A die Einwirkungsgrössen auf den Container (5) und/oder auf die im Container (5) befindlichen Güter (3) registriert werden.

3. Verfahren nach Anspruch 1 oder 2,
**dadurch gekennzeichnet, dass**
im Verfahrensschritt B die Transponder (1) ein ad-hoc-Netzwerk bilden.

4. Verfahren nach einem Ansprüche 1 bis 3,
**dadurch gekennzeichnet, dass**
für den Verfahrensschritt C mittels von der Kommunikationseinheit (4) ausgesandten Meldungen (INF1, INF2) an die Transponder (1) aufgrund der von diesen erzeugten Quittungsmeldungen (INF1, INF2) jener Transponder (1, 9) bestimmt wird, der die Gesamtheit der von den Transpondern (1) registrierten Einwirkungsgrössen an die Kommunikationseinheit (4) übermittelt.

5. Verfahren nach einem der Ansprüche 1 bis 4, **gekennzeichnet durch** einen an den Verfahrensschritt C anschliessenden Verfahrensschritt D, wonach
die zugeordnete Kommunikationseinheit (4) einer abgesetzten Zentrale die vom einen Transponder (9) übermittelte Gesamtheit der Einwirkungsgrössen überträgt.

6. Verfahren nach einem der Ansprüche 1 bis 5,
**dadurch gekennzeichnet, dass**
im Verfahrensschritt A zusätzlich die aktuelle Zeit registriert wird.

7. Verfahren nach Anspruch 5 oder 6,
**dadurch gekennzeichnet, dass**
im Verfahrensschritt D zusätzlich eine von einer Ortungseinheit (41) entstammende Ortsinformation übermittelt wird.

8. Verfahren nach Anspruch 6 oder 7,
**dadurch gekennzeichnet, dass**
die jeweilige Ortsinformation in Zeitintervallen in der Kommunikationseinheit (4, 45) gespeichert wird und dass im Verfahrensschritt D bei der Übertragung der Gesamtheit der Einwirkungsgrössen aufgrund der Zeitzuordnung die jeweilige Ortsinformation übermittelt wird.

9. Verfahren nach einem der Ansprüche 1 bis 8,
**dadurch gekennzeichnet, dass**
im Verfahrensschritt C nach erfolgter Übermittlung einer Gesamtheit der registrierten Einwirkungsgrössen der eine Transponder (1, 9) den anderen Transpondern (1) eine Meldung übermittelt, aufgrund der die noch registrierten Einwirkungsgrössen in den Transpondern (1) gelöscht werden.

10. Verfahren nach einem der Ansprüche 1 bis 9,
**dadurch gekennzeichnet, dass**
im Verfahrensschritt A mit dem Sensormittel (20) wahlweise eine oder mehrere der folgenden als Einwirkungsgrössen registriert werden:
- Temperatur,
- Luftfeuchtigkeit,
- Beschleunigung,
- elektromagnetische Feld,
- ionisierende Strahlung,
- chemische Zusammensetzung der Umgebungsluft,
- Öffnung des Containers (5) oder des Gutes (1)
- Trennung einer elektrischen Verbindung bei versuchter oder erfolgter Entfernung eines Transponders (1) vom Container (5) oder Gut(3).

11. Überwachungssystem für mit einem Transportmittel (2) zu transportierende Güter (3) mit Mitteln zur Durchführung der Verfahrensschritte gemäss einem der Ansprüche 1 bis 10.

## Claims

1. Method for monitoring goods (3), with each goods item (3) being assigned a transponder (1) featuring a transceiver module (11, 12) and with a communication unit (4) assigned to the transport means (2) being provided, which is used for wireless bidirectional communication with transponders (1), **characterized by** the following procedural steps:
A Variables which influence a goods item (3) are registered in each assigned transponder (1) by a connected sensor means(20);
B The transponders (1) transfer the registered influencing variables between themselves using their transceiver modules (11, 12);
C One of the transponders (9) transfers via its transceiver module (11, 12) to an assigned communication unit (4) the totality of the influencing variables registered by the transponders (1).

2. Method in accordance with claim 1,
**characterized in that**
individual goods (3) in containers (5) can be found, and that a transponder (1) is assigned to a container (5), and that in procedural step A the influencing variables are registered on the container (5) and/or on the goods (3) to be found in the container (5).

3. Method in accordance with claim 1 or 2,
**characterized in that**
in procedural step B the transponders (1) form an ad-hoc-network.

4. Method in accordance with one of the claims 1 to 3,
**characterized in that**
for procedural step C by means of messages (INF1, INF2) to the transponder (1) sent out by the communication unit (4), on the basis of the acknowledgement messages (INF1, INF2) created by the latter, that transponder (1, 9) is determined which transmits the totality of the influencing variables registered by the transponders (1) to the communication unit (4).

5. Method in accordance with one of the claims 1 to 4, **characterized by** a procedural step D which follows on from procedural step C, whereby the assigned communication unit (4) transmits to a remote control center the totality of the influencing variables transferred by a transponder (9).

6. Method in accordance with one of the claims 1 to 5,
**characterized in that**
the current time is additionally registered in procedural step A.

7. Method in accordance with claim 5 or 6,
**characterized in that**
in procedural step D local information originating from a localization unit (41) is additionally transferred.

8. Method in accordance with claim 6 or 7,
**characterized in that**
the relevant location information is stored at intervals in the communication unit (4, 45) and that in procedural step D for the transmission of the totality of the influencing variables, the relevant location information is transferred on the basis of the time assignment.

9. Method in accordance with one the claims 1 to 8,
**characterized in that**
in procedural step C, after the transfer of a totality of the registered influencing variables, the one transponder (1, 9) sends the other transponders (1) a message, on the basis of which the influencing variables still registered in the transponders (1) are deleted.

10. Method in accordance with one of the claims 1 to 9,
**characterized in that**
in procedural step A one or more of the following are optionally registered as influencing variables with the sensor means (20):
- Temperature,
- Relative humidity,
- Acceleration,
- Electromagnetic field,
- Ionising radiation,
- Chemical composition of the surrounding air,
- Opening of the containers (5) or of the goods (1)
- Disconnection of an electrical connection on attempted or successful removal of a transponder (1) from the container (5) or goods (3).

11. Monitoring system for goods (3) to be transported by a means of transport (2) with means for executing the procedural steps according to one of the claims 1 to 10.

## Revendications

1. Procédé de suivi de marchandises (3), un transpondeur (1) ayant un module (11, 12) d'émission/réception étant associé à chaque marchandise (3) et une unité (4) de communication associée aux moyens (2) de transport étant prévue et servant à la communication bidirectionnelle sans fil avec des transpondeurs (1),
**caractérisé par** les stades de procédé :
A on enregistre des grandeurs influant sur une marchandise (3) dans chaque transpondeur (1) associé par un moyen (20) de capteur raccordé ;
B les transpondeurs (1) transmettrent entre eux par leur module (11, 12) d'émission/réception les grandeurs agissantes enregistrées ;
C l'un des transpondeurs (9) transmet par son module (11, 12) d'émission/réception à une unité (4) de communication associée l'ensemble des grandeurs agissantes enregistrées par les transpondeurs (1).

2. Procédé suivant la revendication 1, **caractérisé en ce que** des marchandises (3) individuelles se trouvent dans des containers (5) et **en ce qu'**un transpondeur (1) est associé à un container (5) et **en ce qu'**au stade A du procédé, on enregistre des grandeurs agissant sur le container (5) et/ou sur les marchandises (3) se trouvant dans le container (5).

3. Procédé suivant la revendication 1 ou 2, **caractérisé en ce qu'**au stade B du procédé, les transpondeurs (1) forment un réseau ad hoc.

4. Procédé suivant l'une des revendications 1 à 3, **caractérisé en ce que**, pour le stade C du procédé, on détermine au moyen de messages (INF1, INF2) envoyés par l'unité (4) de communication au transpondeur (1) sur la base des messages (INF1, INF2) d'accusé de réception produits par ceux-ci, le transpondeur (1, 9) qui transmet la totalité des grandeurs agissantes enregistrées par les transpondeurs (1) à l'unité (4) de communication.

5. Procédé suivant l'une des revendications 1 à 4, **caractérisé par** un stade D de procédé faisant suite au stade C du procédé, dans lequel l'unité (4) de communication associée transmet à une centrale décalée la totalité des grandeurs agissantes transmises par un transpondeur (9).

6. Procédé suivant l'une des revendications 1 à 5, **caractérisé en ce qu'**au stade A du procédé, on enregistre, en outre, le temps présent.

7. Procédé suivant la revendication 5 ou 6, **caractérisé en ce qu'**au stade D du procédé, on transmet, en outre, une information de localisation provenant d'une unité (41) de localisation.

8. Procédé suivant la revendication 6 ou 7, **caractérisé en ce que** l'on mémorise l'information de localisation à des intervalles de temps dans l'unité (4, 45) de communication et **en ce qu'**au stade D de procédé, on transmet, lors de la transmission de la totalité des grandeurs agissantes sur la base de l'association temporelle, l'information de localisation respective.

9. Procédé suivant l'une des revendications 1 à 8, **caractérisé en ce qu'**au stade C du procédé, après avoir effectuer la transmission d'une totalité des grandeurs agissantes enregistrées, l'un des transpondeurs (1, 9) envoie aux autres transpondeurs (1) un message sur la base duquel les grandeurs agissantes encore enregistrées dans les transpondeurs (1) sont effacées.

10. Procédé suivant l'une des revendications 1 à 9,
**caractérisé en ce qu'**au stade A du procédé, on enregistre par le moyen (20) de capteur, à volonté, une ou plusieurs des grandeurs agissantes suivantes :
- température,
- humidité de l'air,
- accélération,
- champ électromagnétique,
- rayonnement ionisant,
- composition chimique de l'air ambiant,
- ouverture du container (5) ou de la marchandise (1),
- séparation d'une liaison électrique lors d'un enlèvement tenté ou effectué d'un transpondeur (1) du container (5) ou de la marchandise (3).

11. Système de suivi de marchandises (3) à transporter par un moyen (2) de transport comprenant des moyens pour la mise en oeuvre des stades du procédé suivant l'une des revendications 1 à 10.
